# EUROPEAN PATENT APPLICATION

(11) **EP 0 704 714 A1**
(43) Date of publication of application: **03.04.1996**
(21) Application number: 95202322.4
(22) Date of filing: 28.08.1995
(51) Int. Cl.: G01S 13/04, G01S 13/02, G01S 7/02

(54) **Microwave passing sensor having a special reflector**

(30) Priority: 27.09.1994 NL 9401570
(71) Applicant: CHL Netherlands B.V., NL-2222 AG Katwijk (NL)
(72) Inventor: Boontje, Peter Diederik, NL-2036 LC Haarlem (NL); Huijzer, Jan Marinus, NL-1082 TG Amsterdam (NL); van der Poel, Stephanes Hendricus, NL-2161 ML Lisse (NL)
(74) Representative: Lips, Hendrik Jan George, Ir.

(57) **Abstract**

The invention relates to a microwave passing sensor system with a transmitting antenna (1) and a receiving antenna (3) positioned on one side (4) of a measuring strip (5). A special flat reflector (7) is positioned on the opposite side (6) of the measuring strip. The transmitting antenna transmits polarized lineair microwave radiation in one direction, which is reflected by the reflector, with rotation of the polarization plane across an angle of 90°, towards the receiving antenna (3), which is polarized perpendicular to the direction of polarization of the transmitting antenna.

Thanks to this cross-polarization system the receiving antenna has a higher signal yield and there is little perturbing radiation. When a passing object interrupts the path (8, 9) of the beam, then the signal of the receiving antenna is significantly reduced, so that a clear indication of the passing of an object through the measurement beam is provided.

## Description

This invention relates to a microwave passing sensor system, comprising
a microwave generator,
a transmitting antenna connected to it, which, when the generator is switched on, transmits a directional microwave radiation beam across a measurement strip having a predetermined width,
a receiving antenna, which receives the transmitted microwave radiation, and
a microwave receiver, which amplifies the signals received by the receiving antenna, and releases a signal when the measurement beam is interrupted or attenuated as the result of an object passing the measurement strip.

Passing sensor systems which operate on the principle of interruption of beams, are generally known. Known applications relate to the monitoring of entrances to shops and buildings, monitoring of traffic with the road surface being the measurement strip, etc. In the case of short measurement strips, the operation is usually with laser light or ultraviolet laser light, in which a laser beam is directed towards a photodetector that releases a signal when the beam is interrupted as the result of a passing object. Another possibility relates to the use of ultrasonic radiation.

Such systems have a sharp and reliable operation when relatively small measurement strip widths are involved, such as when monitoring doors and such like. When larger measurement beam widths, of 20 metres or larger, are involved, then there are problems relating to the measurement sensitivity, transmitter power, and such like. Such a sensor is no longer effective for the monitoring of e.g. the channel of a flood gate. In that case radar, or as the case may be, microwave radiation, is preferred.

A possible arrangement is that a directional, e.g. parabolic, transmitting antenna is positioned on one side of the flood gate channel while a receiving antenna, which receives the micro radiation transmitted by the transmitting antenna, is positioned on the other side. When a vessel passes through the flood gate the microwave beam is interrupted, and this is signalled.

There are problems relating in particular to inland shipping and flood gates in waterways. Inland shipping vessels are generally low-lying flat-bottomed vessels, and in order to signal these, the transmitting antenna and the receiving antenna need to be positioned relatively low on both sides of the flood gate. As a result of beam scattering and reflection off water and other objects, the receiving antenna will still receive a signal, albeit weakened, even when the beam is interrupted as a result of a vessel passing through, this having a marked influence on the accuracy of the measurement. Moreover, when passing by, vessels provide thrusting waves at bow and wash at the rear, which can be further sources of perturbation.

A further disadvantage is that the transmitting and receiving apparatuses are positioned relatively far spaced, so that in practice eventual adjustment is difficult to attain, and it requires at least two persons, and is unfavourable from an economic point of view.

In this regard it is preferable to use a reflector system in which the transmitting and receiving antennas are positioned on the same side of the flood gate, while a reflector, positioned on the far side, reflects the microwaves transmitted by the transmitting antenna back towards the receiving antenna. Nevertheless, one has to cope with the problem that as a result of overcoupling the receiving antenna already receives a signal directly from the transmitting antenna, while furthermore metal objects, and even high waves, may reflect microwaves back towards the receiving antenna. Also, when a vessel passes by, the situation may arise that there will be reflection off the metal surface of the vessel, so that desirable and required attenuation of the signal occurs in a strongly decreased measure and the passing sensor system is quite insensitive.

The object of the present invention is to provide a microwave passing sensor system which alleviates said problems. This bears relation to a microwave passing sensor system in which the advantages of a passive reflector are fully utilized, without the occurrence of disadvantages of perturbing scattering and reflections.

To that end the invention provides for a microwave passing sensor system as described in the preamble of claim 1, characterized in that
the transmitting antenna and the receiving antenna being linearly and mutually orthogonally polarized,
the transmitting antenna and the receiving antenna are positioned on one side of the measurement strip, and a reflector is positioned on the opposite side of the measurement strip, which reflector reflects the micro radiation transmitted by the transmitting antenna towards the receiving antenna,
which reflector has a reflection surface such that the linearly polarized incident radiation emanating from the transmitting antenna is reflected in full or at least in part, with rotation of the polarization plane, towards the receiving antenna.

Preferably, the reflector provides rotation of the polarization plane across an angle of 90°.

The operating principle of the passing sensor system according to the invention is based on cross-polarization. The transmitting antenna is e.g. horizontally polarized, and the receiving antenna is vertically polarized. When the microwave radiation transmitted by the transmitting antenna, which, by direct overcoupling or by reflection off one or other object, propagates towards the receiving antenna, it is almost not "observed" by the receiving antenna because the polarization direction of the receiving antenna has been rotated over an angle of 90° relative to that of the transmitting antenna. In practice some reflection off objects may be observed, but considering that there is no case for any directional polarization, its influence will be but mere.

Conversely, microwave radiation emanating from the transmitting antenna, which is reflected with a rotation property back towards the receiving antenna by the special reflector, is observed by the receiving antenna since the polarization plane has been rotated. Even if this rotation is not over an angle of 90°, it still provides a clear signal. Since only the microwave radiation, reflected off the reflector, is well observed by the receiving antenna, and other radiation is not, the receiving antenna has a strong reception when an uninterrupted measurement beam is received. Conversely, when a passing object interrupts the path of the measurement beam, then there is only a very weak reception. Therefore it can be clearly detected whether a passing object passes through the measurement strip.

A particular aspect of the invention relates to the reflector used therewith, which provides for the rotation of the direction of polarization. According to an effective embodiment, to that end the reflector is provided with a grooved reflection surface, of which the grooves are orientated at an angle of 45° relative to the polarization plane of the incident radiation. The groove width and groove depth may be effectively adjusted to the micro wavelength used. In the case of a micro wavelength of e.g. 24 GHz (wavelength 1,25 cm) one can favourably use a λ/4 magnitude.

The microwave sensor system according to the invention offers a number of important advantages relative to known systems:
(a) Since not a single object in the surroundings, including an object to be detected (vessels, etc.), will depolarize and rotate the linear transmission polarization as completely as the special reflector will, the cross-polarized receiving antenna will receive a strong signal only via the reflector.
(b) The received signal is strongly attenuated when a passing object is positioned between the transmitter, the reflector and the receiver. The received signal must pass the blocking object twice, contrary to rival systems.
(c) On the basis of points (a) and (b), multipath and diffraction phenomena will not adversely affect the probability of detection.
(d) Complete fading through forward reflection of the horizontal surface (water) will not occur when one selects the vertical size of the reflector to be large relative to the wavelength of the microwave radiation (e.g. 45 λ).
(e) Detection will take place only within the rectangular cone with the transmitting antenna or, as the case may be, the receiving antenna at its apex and the reflector at its base.
(f) The "fan-like" shape of the detection area offers the possibility of obtaining an amplitude contour of a passing object if one makes use of a reflector with a large vertical size.
(g) By positioning multiple sensors in sequence one can avail of the possibility of obtaining the velocity and size of a passing object.

Preferably, the embodiment of the microwave sensor system according to the invention is such that the transmitting antenna is a parabolic antenna or another type of bugle or slotted waveguide antenna with an optimalized beam shape and/or beam width with horizontal or vertical polarization, and that the receiving antenna is a bugle-type antenna with vertical or horizontal polarization, and that the reflector has a flat reflector surface with grooves running at an angle of 45° relative to the horizontal axis. However, it is noted that other polarization directions are also possible, as long as the principle of cross-polarization is observed.

Furthermore, since the transmitting antenna and the receiving antenna are located on the same side, they may be combined in a unit in suitable circumstances. In case one combines this unit with further devices (the microwave source for the transmitting antenna and the microwave sensor with attuned amplifier for the receiving antenna), then one can obtain a compact device which is readily portable or positionable.

Furthermore, the cross-polarization may be effectively combined with co-polarization (of the transmitter). In that case, the embodiment is such that there is a second receiving antenna, having the same polarization as the transmitting antenna, and with a receiver connected to it. The simultaneous ceasure of cross-polarization reception with an increased co-polarization reception may be utilized for increasing the probability of detection. The signals of both receivers may e.g. be processed in a subtraction circuit, leading to the creation of a "large" signal. Further, the co-polarization reception is expected within the main loop of the transmitting antenna and therefore be more spatially extended than the cross-polarization cone. In this way the cross-polarization reception can be used as an early notice with a smaller probability of detection. This provides for another property which can be incorporated in the passing sensor according to the invention.

The second receiving antenna (co-polarization) may thereby be effectively incorporated in the unit of the transmitting antenna and the first antenna (cross-polarization), so that in this case, too, the total sensor can be constructed as a compact unit.

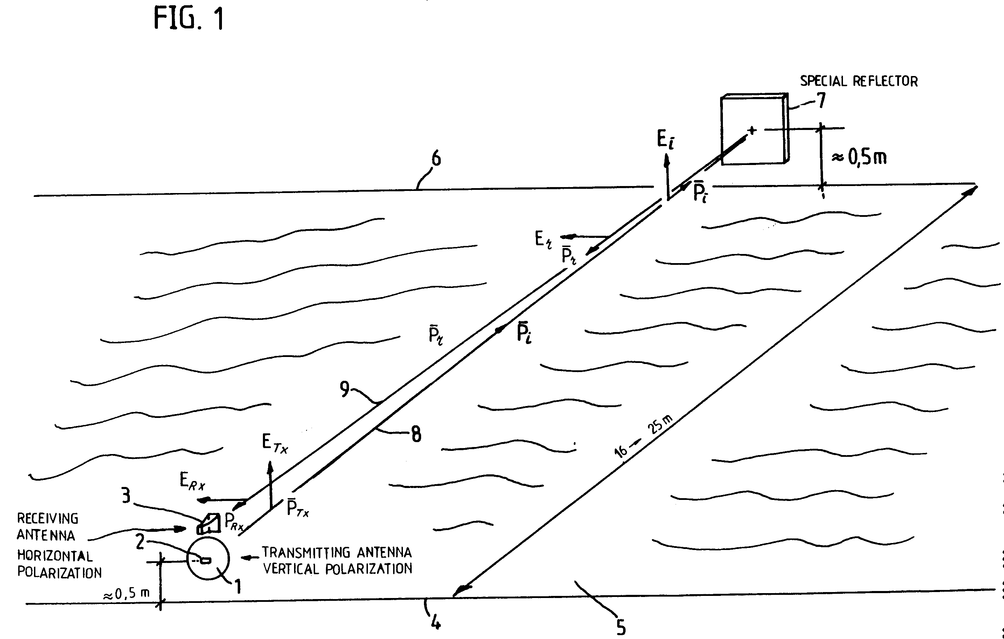

The invention is described in detail with reference to the drawings. In the drawings
Figure 1 is a schematic illustration of the arrangement of the microwave passing sensor system according to the invention, as used for monitoring a flood gate channel, and
Figure 2 is a cross-sectional view of this arrangement for the purpose of illustrating the beam path.

In the figures reference number 1 indicates a parabolic radar antenna. This relates to a so-called small sized Cassegrain antenna, in which the radiation surface 2 is located in the focal point of the parabole. The radiation surface is such that the E vector of the microwave radiation is polarized in the vertical direction.

Located in the vicinity of the transmitting antenna 1, slightly above it, is a bugle-type receiving antenna which is horizontally polarized (i.e. the E vector is in the horizontal direction). The transmitting antenna 1 and the receiving antenna 3 are located on the one side 4 of a sluice channel 5 of a flood gate which is not further detailed.

A flat reflector 7 is positioned on the far side 6 of the sluice channel 6. This reflector 7 has a special reflector surface which reflects the microwave radiation beam 8, transmitted from the parabolic antenna, according to the reflected measurement beam 9 towards the bugle-type antenna 3. The reflection surface of the reflector 7 is embodied such that the vertical polarization, emanating from the transmitting antenna 1 is reflected rotated across an angle of 90°. To this end this reflector surface is effectively provided with slant grooves (not shown), which are positioned at an angle of 45° relative to the horizontal axis. Under the stated conditions the vertically polarized radiation, emanating from the parabolic antenna 1, will be observed only by the receiving antenna 3 when it is reflected by the flat reflector 7. This means that a larger signal yield is obtained at the receiving antenna.

In the present example the arrangement of the transmitting antenna is such that it is located with its focal point 0,5 metre above the water level in the sluice channel, while the centre of the flat vector 7 also is located at the same height on the opposite side. This enables monitoring of flat-bottomed cargo vessels as is usual in inland shipping.

With a sluice channel width of 16 to 25 metres, a microwave source of 24 GHz, being 1000 Hz modulated and having a power consumption of 20 mW, may be effectively used for transmitting. Thanks to the strong signal reception of the bugle-type antenna, a microwave sensor and an attuned amplifier with a sensitivity of 50 dbm may suffice as a receiver connected to it. However, it is clear that the quantities stated herein are not essential with respect to the invention.

If a vessel (not shown) interrupts the beam path 8, 9, then there will be almost no signal received through the bugle-type antenna 3. Although radiation will be reflected off the wall of the vessel, this radiation will not be depolarized like the radiation reaching the reflector, and will therefore not be observed by the receiving antenna 3. Therefore, the difference in signal strength in the absence or presence of a vessel provides a clear indication.

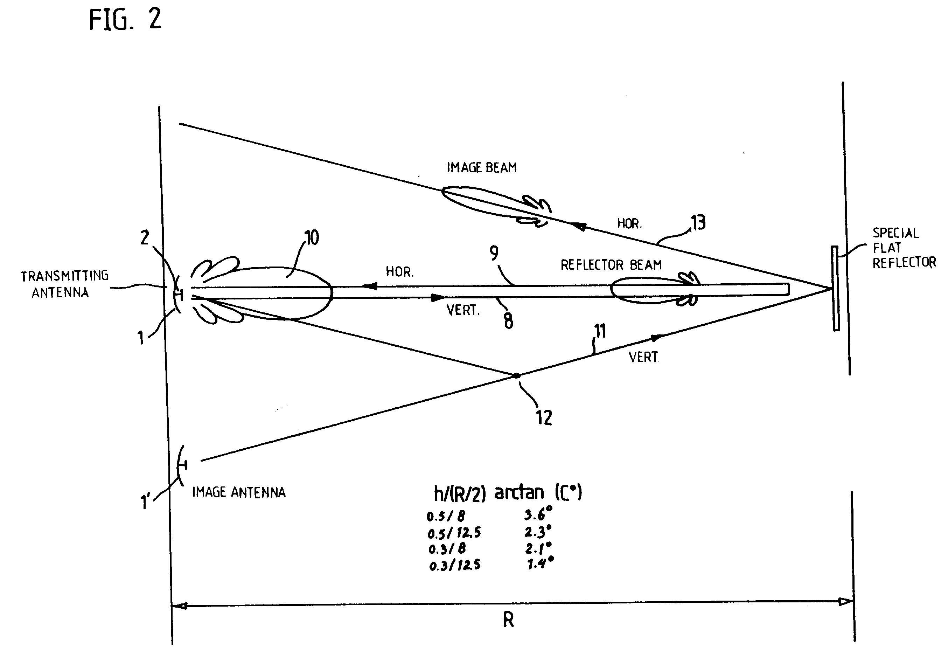

Figure 2 is a cross-sectional view of the arrangement, for the purpose of illustrating the path of the beam. The microwave beam transmitted by the transmitting antenna 1 has the typical "radar form" with a main lobe and side lobes. The main part of this radiation beam propagates horizontally along the direction of the axis of the parabolic antenna 1 towards the flat reflector 7. There are, however, also lateral rays which, when reflected across water, may reach the reflector. The lateral beam 11, for example, reflects off point 12 on the water surface to reach the flat reflector 7 as if it was transmitted from an imaginary antenna 1. Such a lateral beam, were it to be reflected back to the receiving antenna 3, could cause an obstructive fading effect. Nevertheless, this does not occur since the beam 11 is reflected by the reflector according to 13, and therefore cannot, or barely can, reach the bugle-type antenna 3.

In the foregoing the invention has been described being used as a flood gate microwave passing/enabling sensor. However, it is apparent that there are numerous other possible uses.

For example, the system according to the invention can be effectively used for monitoring the operations deck of a drawbridge or lifting bridge.

Another interesting application is that of a motorway passing detector. In that case the reflector is positioned on or attached to the crash barrier, and the transmitter/receiver system, which is embodied as one unit, is positioned at the roadside. Detection for each lane is also possible through combinations of sensors or by positioning in viaduct or signalling gates.

A very particular use is that of an automobile distance sensor. In this the system needs to ensure that an automobile approaching from the rear does not come closer than a predetermined distance. In this case the embodiment may be such that the leading car has the special reflector at its rearside, e.g. on the license plate, while the trailing car has a transmitting/receiving unit at its front side, which unit detects when being in a certain position. With this a distance CW Doppler cruise-locking system can be effectively made use of.

The typical form of the microwave beam further provides the possibility of carrying out a kind of profile recognition of passing objects. The silhouette of a passing object modulates the surface of the special reflector plate, which in that case needs to be as high as or higher than the highest object which is to be recognized.

Further uses are, inter alia, as a conveyor band object detector or counter, for gate monitoring, and such.

These and other further uses are deemed to be apparent to the person skilled in the art.

## Claims

1. A microwave passing sensor system, comprising
a microwave generator,
a transmission antenna connected to it, which, when the generator is switched on, transmits a directional microwave radiation beam across a measurement strip having a predetermined width,
a receiving antenna, which receives the transmitted microwave radiation, and
a microwave receiver, which amplifies the signals received by the receiving antenna, and releases a signal when the measurement beam is interrupted or attenuated as the result of an object passing the measurement strip,
**characterized in that**
the transmitting antenna and the receiving antenna being linearly and mutually orthogonally polarized,
the transmitting antenna and the receiving antenna are positioned on one side of the measurement strip, and a reflector is positioned on the opposite side of the measurement strip, which reflector reflects the micro radiation transmitted by the transmitting antenna towards the receiving antenna,
which reflector has a reflection surface such that the linearly polarized incident radiation emanating from the transmitting antenna is reflected in full or at least in part, with rotation of the polarization plane, towards the receiving antenna.

2. A microwave passing sensor system according to claim 1, **characterized in that** the reflector provides a rotation of the polarization across an angle of 90°.

3. A microwave passing sensor system according to claim 2, **characterized in that** the reflector is provided with a grooved reflection surface, of which the grooves are orientated at an angle of 45° relative to the polarization plane of the incident radiation.

4. A microwave passing sensor system according to claim 3, **characterized in that** the groove width and groove depth are adjusted to the micro wavelength used.

5. A microwave passing sensor system according to claim 4, **characterized in that** the transmitting antenna is a parabolic antenna or another type of bugle or slotted waveguide antenna with an optimalized beam shape and/or beam width with horizontal or vertical polarization, and that the receiving antenna is a bugle-type antenna with vertical or horizontal polarization, and that the reflector has a flat reflector surface with grooves running at an angle of 45° relative to the horizontal axis.

6. A microwave passing sensor system according to any of the preceding claims, **characterized in that** the transmitting antenna and the receiving antenna are combined in one unit.

7. A microwave passing sensor system according to any of the preceding claims, **characterized in that** there is a second receiving antenna, having the same polarization as that of the transmitting antenna, and a receiver connected to it.

8. A microwave passing sensor system according to claim 6 or claim 7, **characterized in that** the second receiving antenna is incorporated in the unit of the transmitting antenna and the first receiving antenna.
